# EUROPEAN PATENT SPECIFICATION

(11) **EP 2 942 571 B1**
(45) Date of publication and mention of the grant of the patent: **13.09.2017**
(21) Application number: 15166345.7
(22) Date of filing: 05.05.2015
(51) Int. Cl.: F24D 17/00, E03B 7/04, F24D 19/10, E03C 1/05, G05D 23/19

(54) **WATER- AND ENERGY-SAVING SYSTEM FOR SUPPLYING HOT WATER**
WASSER- UND ENERGIESPARSYSTEM ZUR BEREITSTELLUNG VON WARMWASSER
SYSTÈME D'ÉCONOMIE D'EAU ET D'ÉNERGIE POUR L'ALIMENTATION EN EAU CHAUDE

(30) Priority: 07.05.2014 IT GE20140041
(43) Date of publication of application: 11.11.2015
(73) Proprietor: Pesavento, Franco, 24030 Solza (BG) (IT); Pesavento, Evelina, 24030 Solza (BG) (IT); Pesavento, Luciano, 24030 Solza (BG) (IT)
(72) Inventor: Pesavento, Franco, 24030 Solza (BG) (IT)
(74) Representative: Karaghiosoff, Giorgio Alessandro

(56) References cited:
- EP-A1- 2 239 514
- FR-A1- 2 936 042
- FR-A1- 2 946 767
- US-A- 5 564 462

## Description

The present invention relates to a water- and energy-saving system for supplying hot water, which system comprises a hot water generating boiler or water heater or heat pump, an inlet supplying cold water to said water heater or said boiler or heat pump and a delivery outlet for the water heated by said boiler which is connected by a hot water distribution line to at least one supply tap, a hot water recirculation line is provided which connects one point of said distribution line, downstream of the delivery outlet and upstream of the supply tap to the inlet supplying cold water and valves for opening and closing the recirculation line.

Recirculation systems of this type are known.

For example EP 2 239 514 A shows a water and energy saving system, where a device controls the hot water delivery by acting on a three-ways valve and a circulation pump within a recycle, based on data received from a temperature sensor situated on the water supply tube.

In these known systems, in the hot water recirculation pipe, from a point upstream of the fixture to the inlet of the water heater or boiler or heat pump, there is generally provided a valve closing the recirculation pipe which is closed when the generated hot water reaches a given predetermined temperature. In this case, the user can supply hot water, which passes through the usual distribution line, while the recirculation pipe is closed.

Such condition presents a drawback that causes hot water leakages and therefore energy waste.

Since the recirculation line is closed upon reaching the predetermined water heating temperature and hot water is supplied only through the distribution line, all the hot water present in the recirculation line is not used and it is wasted. Since the water distribution system may have recirculation networks even complicated and with a considerable total length, the volume of hot water in such recirculation network as well as the energy wasted for bringing the water to the selected heating temperature can be considerable.

It is important to note that upon supplying, namely when hot water has reached the desired and set temperature, both the hot water in the distribution line and the water in the recirculation line substantially have the same temperature.

Therefore the invention aims at improving a system of the type described hereinbefore in such a way that, in view of a reduction in the system costs and particularly with reference to the control of the recirculation functions, it is possible to avoid wastes in terms of volume of unused hot water and energy wasted without being fully employed.

In order to achieve said aim, therefore the invention provides a water- and energy-saving system as defined in claim 1. A method of controlling such a system is defined in claim 10. According to a further characteristic, the control unit may provide an interface for inputting two temperatures values, one of which being relative to the hot water temperature desired for supplying it and the other one being relative to the water temperature inside only the recirculation line or network, the said temperature value controlling the opening/closing condition of the said valve of said recirculation line or network in comparison with minimum and maximum threshold values of the said temperature.

Still according to a further improvement characteristic, the valve and/or the temperature sensor in the recirculation line or network are preferably provided upstream of the junction of said recirculation line or network with the distribution line and preferably possibly in close vicinity to said junction.

In a variant embodiment there are provided respectively two temperature sensors in the distribution line or network upstream of the junction with the recirculation line or network and in the recirculation line or network, still upstream of said junction point, while in the recirculation line or network there is provided the opening/closing valve, the control unit being provided with inputs from each one of the temperature sensors to generate the signal actuating said valve.

Said control unit can also be integrated within the control unit of the water heater or boiler or heat pump.

In the recirculation line or network a recirculation pump may also be provided. This can be a pump additional with respect to a possible delivery pump present in the water heater or boiler or heat pump, or it may be said delivery pump already present in the water heater or boiler or heat pump.

Then a variant embodiment provides a further opening/closing valve that is provided in the hot water distribution line or network upstream of the junction with the recirculation line or network, the control unit being provided with inputs for each one of the temperature sensors and with generators of the signal actuating said opening/closing valve in the recirculation line or network and of said opening/closing valve in the hot water distribution line or network.

A further variant still provides a third opening and closing valve, servo-controlled by the control unit, which opening/closing valve is provided downstream of the junction of the hot water distribution line or network with the recirculation line or network and upstream of the supply taps or of a specific supply tap.

In all the variant embodiments described above, at least one junction between the distribution line or network and the recirculation line or network is provided upstream and near the supply tap farther from the delivery of the water heater or boiler or heat pump.

The system according to one or more of the characteristics set forth above may be made also in combination with systems already existing and wherein a recirculation line or network has not been integrated during the first installation.

In this case it is possible to provide the recirculation line in the form of an additional recirculation pipe which is installed by using all the current installation techniques, such as chased installation, the installation within raceways or others known to the person skilled in the art.

In this case the pump or the valve or valves as well as the control unit may be easily provided directly near the water heater, while as regards the temperature sensors or the thermostats they have to be placed near the junction between the distribution line and the recirculation line.

In this case the temperature sensors can communicate with the control unit both by cable, and also by wifi or another radio communication protocol.

By means of the characteristics described above, once the desired heating temperature is reached it is possible to use not only the water of the distribution line but also a large amount of the water provided in the recirculation line. Indeed, as it will appear in a more detailed way in the following descritpton, when the supply tap is opened for requesting hot water, the cold water from the water supply network pushes the water in the recirculation line towards the supply tap.By means of the temperature sensor provided in the recirculation line, directly upstream of the junction with the distribution line, the control unit determines the temperature in the recirculation line and when this latter reaches a predetermined threshold value corresponding to a temperature lower than the one set for the hot water, the control unit actuates the valve in the closing condition of the recirculation pipe and hot water is supplied only through the distribution line.

The presence of the temperature sensor also in the distribution line, upstream of the junction with the recirculation line, allows the supply from the distribution line to be delayed and only the water in the recirculation line to be used, till hot water has a temperature higher than a given set threshold within said recirculation line, thus further delaying the activation of the boiler or heat pump. As regards the actions activating the recirculation, that is hot water demand actions, different methods are possible.

A first embodiment provides a user control interface, in the form of a control button and/or keypad or other interfaces for inputting commands that generate a control signal transmitted to the controller, that is the control unit, both by cable and by wireless communication.

In a second embodiment on the contrary it is possible to transmit a command pulse demanding hot water and starting the recirculation system by means of a temporary action opening the hot water supply tap for a very short period and then by closing it. Therefore within the circuit a first pressure drop occurs upon the opening of the tap and then pressure increases substantially again to the initial level due to the tap being closed. A pressure sensor connected to the control unit provides to it at least the change parameters of the dropped pressure and the recovery parameters of the pressure value and/or also the duration between the two negative and positive change ramps of the pressure. These values are compared with pre-set values and depending on the result of the comparison (compliance with the pre-set values), the changes are interpreted as simple non significant changes or as control signals for activating the supply functionalities with recirculation.

In another system not according to the invention, the opening and closing timing of the valves are determined according to the distance of the supply tap from the boiler or water heater or heat pump. and from the intersection with recirculation line.

By means of a suitable setting of the opening/closing timing of the valves, this allows to make a more efficient use of the water already heated both from the recirculation line and from the part of the main line extending from the intersection with the recirculation line to the supply tap which has been activated. This feature guarantees a maximization of the energy and water saving.

The invention provides further improvements or variants that are the subject matter of the sub-claims.

The characteristics of the invention and the advantages deriving therefrom will be more clear from the following description of some embodiments with reference to the annexed drawings, wherein:
Figure 1 to 4 are a first embodiment in different operating conditions respectively.
Figure 5 is a variant embodiment of the system according to the invention and the preceding figures.
Fig. 6 is a principle block diagram of the control unit 2, as an example and not as a limitation.

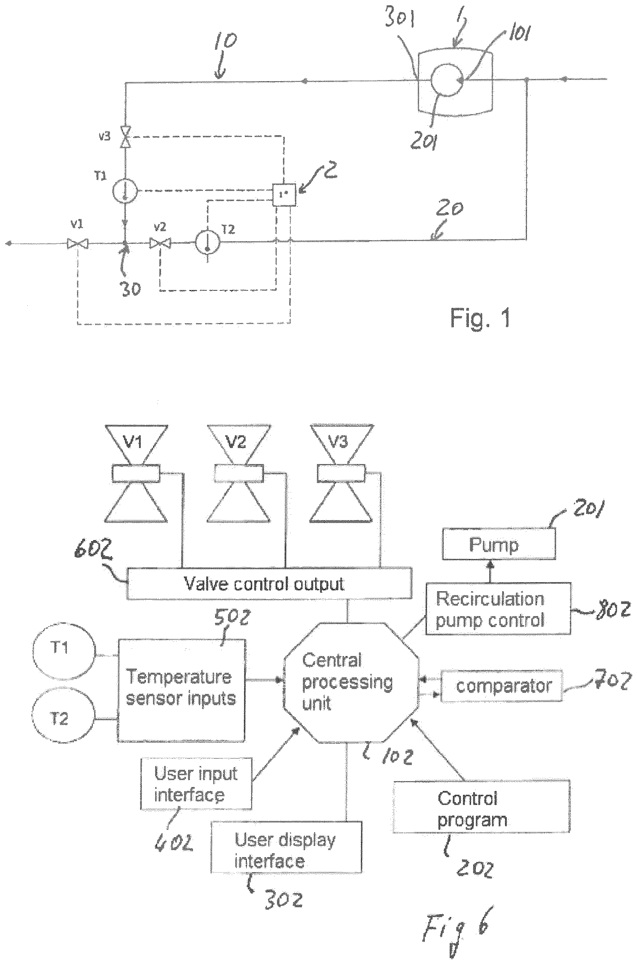

With reference to fig.1, it shows the diagram of one embodiment of the system according to the present invention.

Such representation is limited to one illustrative embodiment, wherein there is provided only one distribution line 10 for a fixture with a corresponding recirculation line 20. In complex systems, it is possible, with several supply points arranged in different areas, for both the distribution line and the recirculation line to be in the form of a distribution network and a recirculation network. In this case, the teachings of the present invention are applied also to these networks with no substantial changes with respect to the simplified example described here and shown in the figures.

Cold water is supplied to a water heater or boiler or heat pump 1 from the water supply system at the inlet 101 of the water heater or boiler or heat pump.

Preferably the water heater 1 or the boiler or a heat pump heats the water into and the hot water is supplied to the distribution line or network 10 through a delivery outlet 301. A recirculation line 20 is connected on one inlet side to the water heater 1 such as a boiler or a heat pump or similar device, upstream of the inlet 101 and on the other side at 30 to the distribution line 10.

In the distribution line 10 there is provided a servo-controlled valve V3 and one temperature sensor T1, for example in the form of a thermostat or even only a thermometer. The temperature sensor T1 is connected to an input of a control unit 2 which is connected to a section reading and storing the signal of the temperature sensor T1 which corresponds to the temperature detected in the distribution line 10.

The valve V3 is controlled by means of a control signal generated by the control unit 2.

Likewise, in the recirculation line 20 there are provided a servo-controlled valve V2 and one temperature sensor T2, which are connected respectively to an output for the control signal and to an input for reading the signal corresponding the temperature in the recirculation line 20.

Figure 6 shows a principle block diagram of the control unit 2, as an example and not as a limitation.

A central processing unit 102 (CPU or microcontroller or Plc or other similar units) executes a control logic program that is stored within a memory 202. The central processing unit controls also a user display interface 302 and it is able to receive input information, data or other ones through a user input interface 402.

By the user interface, the user can enter in the central processing unit the data about the desired temperature of the hot water to be supplied and moreover he/she can define beforehand a minimum temperature threshold detected in the recirculation line 20 or he/she can indicate a specific temperature value for the hot water in the recirculation line 20. Two temperature sensors T1 and T2, provide temperature-related signals to an input unit 502 that reads and stores, as well as transmits the signals to the central processing unit. A valve control output 602 receives commands from the central processing unit 101 on the basis thereof it generates and transmits to the valves V1, V2, V3 an opening or closing control signal. Likewise the signal is also supplied to a recirculation pump 201 through a generator 802 of such signal.

The commands of the recirculation pump 201 and of the valves V1, V2, V3 are generated by the execution of the control program 202 according to operating criteria that will be detailed below, but generally these are about the execution of a comparison between the signals provided by the temperature sensors and the temperature values entered by the user 402 and stored 202 as well as processed by the control program. A comparator 702 therefore provides to receive the temperature signals and to compare them with the thresholds provided for the latter. Therefore on the basis of the result one or more of the three valves V1, V2, V3 are opened or closed according to the proper combinations and/or the recirculation pump 201 is switched on or off.

According to another aspect not according to the invention, the commands of the recirculation pump 201 and of the valves V1, V2, V3 are generated on as a function of the distance of the supply tap from the boiler or water heater or heat pump and/or from the intersection between the distribution line and ricirculation line. The commands refer to the opening or closing timing of the valves, in terms of points in time and duration.

With reference to the example of figure 1, downstream of the junction 30 between the distribution line 10 and recirculation line 20, in order to possibly allow the hot water supply to be stopped during the water heating step the two valves V2 and V3 are opened to enable recirculation, while the supply is stopped since the water is not at the set and desired temperature.

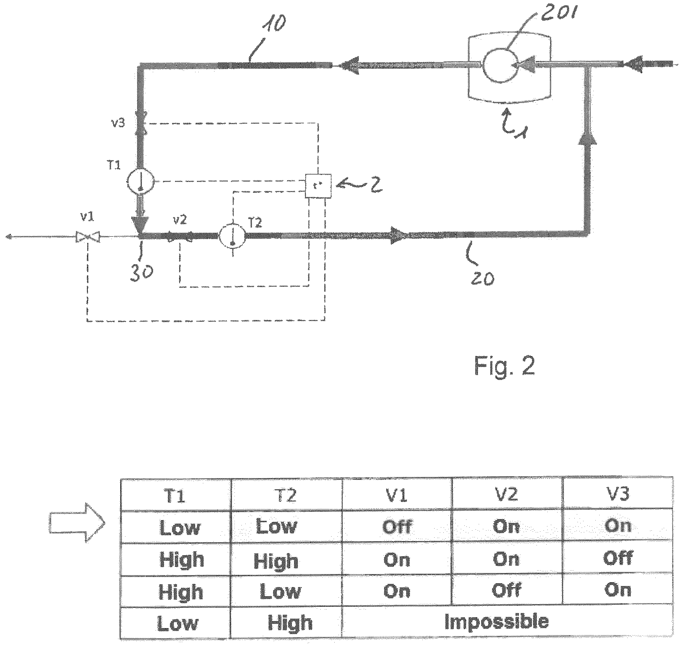

With reference to the following figures 2 to 4, they show an example of the operating steps of the system.

Figure 2 shows the initial condition when the water to be supplied is not at the desired temperature. In this case the temperatures T1 and T2 measured by the corresponding sensors are both low and therefore the control unit will provide to close valve V1, in order to prevent water not at the desired temperature from being supplied, while valves V2 and V3 are opened in order to enable the recirculation, as well as the recirculation pump 201 is switched on.

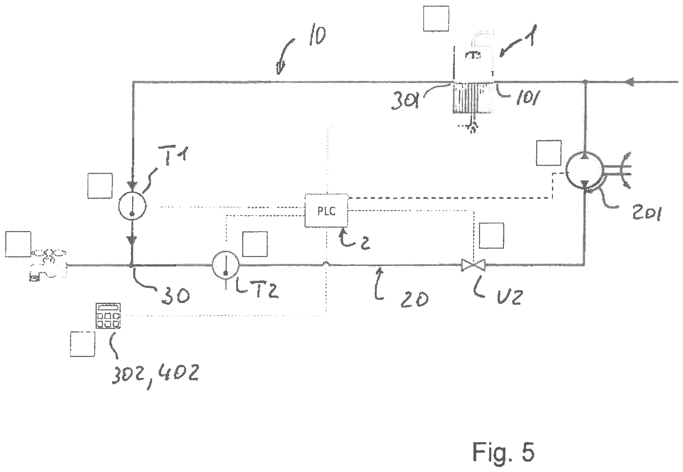

With reference to such pump 201 it is possible to provide a pump separated from the boiler or water heater or heat pump 1 as it will be clear from the variant of figure 5 or it is also possible to provide to use the pump provided within the water heater or boiler or heat pump 1.

The flow followed by the hot water in such heating step with recirculation is denoted by the thicker lines in figure 2.

When the water temperature is reached the valve V1 and the valve V2 in the recirculation line 20 are opened, while the valve V3 in the distribution line 10 is closed and the pump is stopped.

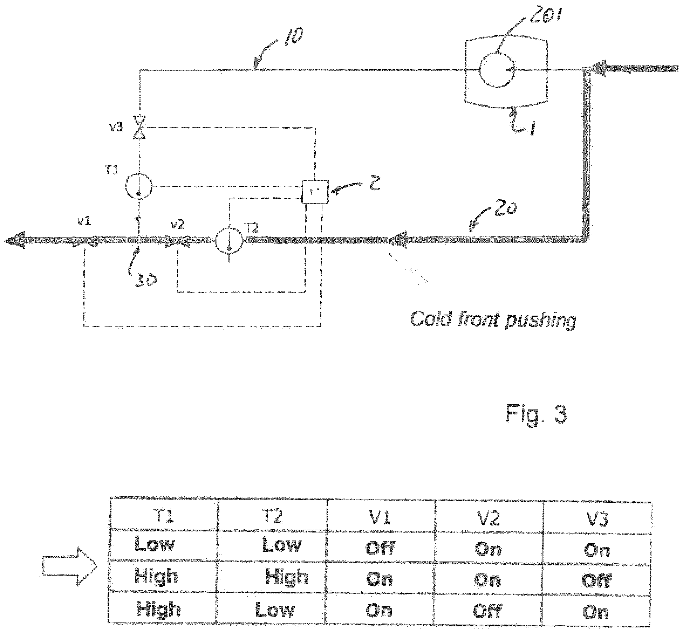

In these conditions, the system operates as shown in figure 3. The heating action with recirculation has caused in both the distribution line 10 and recirculation line 20 the water to be substantially at the same temperature equal to or higher than the temperature desired and previously set in the control unit, as it results from the table of fig.3 at the line indicated by the arrow.

As the first supply step, when hot water is required, initially hot water present in the recirculation line 20 is supplied, while by closing the valve V3, the distribution line is excluded.

Such step emptying the recirculation line 20 ends when the temperature therein goes below a predetermined value that is set in the control unit 1, when T2 takes a value below a predetermined temperature threshold, due to the fact that the hot water in the distribution line 20 is pushed towards the supply taps by the entering cold water, the valve V2 is closed and the valve V3 is opened, therefore the user does not experience in practice any substantial change in the temperature of the supplied water.

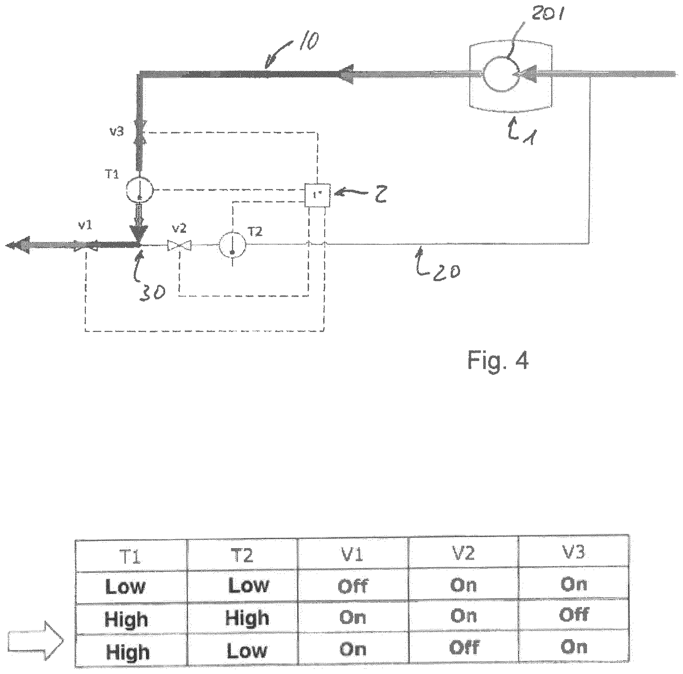

This condition is shown in figure 4, while the table of this figure shows that the valve V2 is closed, while valves V3 and V1 are opened and the temperature in the distribution line is high, while the one in the recirculation line is low with reference to the corresponding thresholds.

According to a further embodiment that can be provided as an alternative or in combination with the previous variants when there are no conditions of clear operating conflict, it is possible to recover and use ALL the heated water also in the MAIN branch, by means of a specific time-demand. In this case the arrangement consists in setting the estimated time for supplying hot water, after having already emptied the recirculation branch at time T controlled by the control unit. Therefore the heating is stopped such to allow cold water entering the system to push all the already hot water provided in the main branch towards the supply tap.

The system according to the present invention can operate according to different modes that can be set by a suitable selection by the user through the interface 402. The selection is among different recirculation control methods settable by the user.

The control of the flow rate in the recirculation circuit can occur in several manners:
Continuously;
Thermo-controlled;
For time bands;
Clock thermostats;
On demand.

The first case is the most immediate one, but it is also the least cheap one and the least environmental-friendly one. In this case the recirculation pump is constantly switched on.

The thermo-controlled case provides to keep the water within a maximum and minimum temperature range. When the maximum one is reached, the recirculation is stopped, when the minimum one is reached it is operated.

The time-band control involves a programming when hot water recirculation is switched on.

The clock thermostat is the direct evolution of the two above cases that are combined for improving the control performances. It is a control system that has a thermostatic control with limit temperatures that change depending on the time band.

Finally it is possible to provide also a recirculation system with on-demand activation by the user, when hot water is demanded before the consumption, with the possibility of setting the desired temperature. The system circulates the water and it warns the user when it is ready to be used. Also this one is a plug-and-play system to create a recirculation network in an integrated arrangement.

In this case, the control unit 1 may be provided with a wireless communication system having a portable user interface 402, such as for example a dedicated unit or a mobile phone or the like.

Variants of the on-demand mode are possible, which substantially are of two types:
A first embodiment provides a user control interface, in the form of a control button and/or keypad or other interfaces for inputting commands that generate a control signal transmitted to the controller, that is the control unit, both by cable and by a wireless communication.

In a second embodiment on the contrary it is possible to transmit a command pulse demanding hot water and starting the recirculation system by means of a temporary action opening the hot water supply tap for a very short period and then by closing it. Within the circuit therefore a first pressure drop occurs upon the opening of the tap and then pressure increases substantially again to the initial level due to the tap being closed. A pressure sensor connected to the control unit provides to it at least the change parameters of the dropped pressure and the recovery parameters of the pressure value and/or also the duration between the two negative and positive change ramps of the pressure. These values are compared with pre-set values and depending on the result of the comparison (compliance with the pre-set values), the changes are interpreted as simple non-significant changes or as control signals for activating the supply functionality with recirculation. In this case in the shown circuit it is possible to insert a pressure sensor that transmits the measurement signal to the control unit or it is also possible to use the pressure sensors already present in the hot water generating water heater and which are merely suitably interfaced with the control unit as regards the measurement signal. Both the alternatives are not shown specifically since they are clear from the description thereof.

Figure 5 shows a variant embodiment of the system according to the present invention allowing costs to be further reduced and the installation to be simplified, above all in cases of changes of an already existing system.

In figure 5 the same numbers will be maintained for parts having the same or identical functions.

Particularly from the figure it results that in the distribution line 10 there is no valve, while there is a temperature sensor T1. In the recirculation line 20 there are both the valve V2 and the temperature sensor T2, while the pump 201 is a pump separated from the water heater 1 or boiler or heat pump. The control unit 2 in the form of a PLC can be managed by the user by means of a keypad with a display that is the user input and display interface 402, 302 as referred to in figure 6.

Also with such arrangement it is possible to operate by the steps described above with reference to the previous embodiment of figures 1 to 4.

In this specific case, the steps comprise:
- Setting the minimum and maximum temperature thermostats, an action to be carried out only once upon starting the system;
- For hot water demand: it is possible to use the input interface 402, that is a button on the keypad.
- Pump is switched on and valve V2 is opened;
- Water heater 1 is started and heating recirculation starts;
- Once the maximum set temperature is reached, the pump 201 stops, an acoustic signal warns the user;
- The water heater 1 is turned off (the use may be delayed);
- After the opening of the supply tap, the water heater again turns on;
- The water of both the branches is used by means of the pushing action of the entering water, upon reaching the minimum temperature the valve V2 is closed, partitioning the recirculation branch;
- The water heater goes on with the full operational production;
- The pump 201 will be switched on only at the next hot water demand;
- If during the heating step a use is opened this is not a problem: the heating time merely is extended.
The system may be provided in the integrated form in case of new installations or it can be obtained by adaptation retrofitting of already existing conventional systems.

The operating system does not change, and it is sufficient to mount near the water heater 1 the valve V2 and the pump 201. As regards the recirculation branch the most suitable path can be verified, which can be external with a thermal heated and insulated pipe, or internal, possibly covered by a frame between wall and ceiling. As regards hot and cold water the two branches are well distinct and separated without any kind of interference.

All the taps will be equipped with the keypad for demanding hot water, it is possible to have hot water by a demand with keypad or by opening the tap for few seconds and then closing it as better explained in the previous paragraphs, for activating the recirculation system.

## Claims

1. Water- and energy-saving system for supplying hot water, which system comprises a hot water generating boiler or water heater or heat pump (1), with an inlet (101) for supplying cold water to said hot water generating boiler or water heater or heat pump (1) and a delivery outlet (301) for the water heated by said hot water generating boiler or water heater or heat pump (1) which is connected by a hot water distribution line (10) to at least one supply tap, wherein a hot water recirculation line (20) is provided which connects at least one junction (30) of said distribution line (10), downstream of the delivery outlet (301) and upstream of at least one supply tap to the inlet (101) supplying cold water to the hot water generating boiler or water heater or heat pump (1) and valves (V2) are provided for opening and closing the recirculation line, and wherein:
at least one temperature sensor (T2) is provided in the recirculation line (20), and
the system comprises a control unit (2) with:
an interface (402) for inputting at least one temperature value relative to the desired supply temperature of hot water;
a comparing section (702) with at least one input from said at least one water temperature sensor (T2) in the recirculation line (20);
a unit (602) generating and transmitting the command actuating at least one valve (V2) closing/opening the recirculation line (20), wherein the control unit controls said at least one valve (V2) in order to keep the recirculation line (20) open during the step supplying hot water till the water temperature inside said recirculation line (20) drops below a predetermined threshold temperature lower by a given value than the set supply temperature.

2. System according to claim 1, wherein there are provided two temperature sensors (T1, T2) of which a temperature sensor (T1) in the distribution line (10) upstream of the junction (30) with the recirculation line (20) and the temperature sensor (T2) in the recirculation line (20), the control unit (2) being provided with inputs from each one of the temperature sensors (T1, T2) to generate within unit (602) the signal actuating the said opening/closing valve (V2).

3. System according to claim 2, wherein in the distribution line (10), upstream of the junction (30) with the recirculation line (20) there is provided a closing/opening valve (V3) for said distribution line (10), which valve is controlled by the control unit (2) depending on the temperature measured in the distribution line (10) and in the recirculation line (20) by the respective sensors (T1, T2).

4. System according to claim 3, wherein the valve (V2) and/or the temperature sensor (T2) in the recirculation line (20) and/or the valve (V3) and/or the temperature sensor (T1) in the distribution line (10) are provided upstream of the junction (30) of said recirculation line (20) with the distribution line (10) and preferably possibly in close vicinity to said junction referring to the direction of supply of hot water upon request of hot water.

5. System according to one or more of the preceding claims, wherein in the recirculation line (20) and/or in the distribution line (10) there is also provided a recirculation pump (201) which is a pump added to a possible delivery pump provided in the water heater (1) or boiler or heat pump, or said delivery pump already provided in the water heater or in the boiler or heat pump and which pump (201) is controlled by the control unit (2).

6. System according to one or more of the preceding claims, wherein there is provided a third opening and closing valve (V1), servo-controlled by the control unit (2), which opening/closing valve (V1) is provided downstream of the junction (30) of the hot water distribution line (10) with the recirculation line (20) and upstream of the supply taps or of a specific supply tap referring to the direction of supply of hot water upon request of hot water.

7. System according to claim 6, wherein valves (V1, V2, V3) and/or the temperature sensors (T1, T2) and/or the pump (201) and/or the input interface (402) and a display interface (302) to the user communicate with the control unit (2) by radio connection, such as Wi-fi or the like.

8. System according to one or more of the preceding claims wherein there are provided control means which control a demand step such to generate a specific time-demand by setting the estimated time for supplying hot water, after having already emptied the recirculation branch at time T, the heating being stopped such to allow cold water entering the system to push all the already hot water provided in the main branch towards the supply taps.

9. System according to one or more of the preceding claims 7 or 8 **characterized in that** the user display interface (302) is in the form of a control keypad there being provided a keypad for each supply tap and said keypad being provided with a control button for demanding hot water.

10. Method for controlling a system generating hot water according to claims 1-9, which system comprises a hot water generating boiler or water heater or heat pump (1), an inlet (101) supplying cold water to said water heater or to said boiler or to said heat pump and a delivery outlet (301) for the water heated by said boiler which is connected by a hot water distribution line (10) to at least one supply tap, and in such system there is provided a hot water recirculation line (20) which connects at least one junction (30) of said distribution line (10), downstream of the delivery outlet (301) and upstream of at least one supply tap to the inlet (101) supplying cold water in the water heater (1) or in the boiler or in the heat pump and valves (V2) opening and closing the recirculation line, and wherein:
setting a temperature value relative to the desired supply temperature of hot water;
measuring a temperature (T2) in the recirculation line (20) during the recirculation;
comparing the said measured temperature (T2) with a predetermined threshold temperature lower by a given value than the water supply temperature;
and upon reaching the water supply temperature in the recirculation line (20), the hot water of the recirculation line (20) is supplied to the supply tap together with the hot water in the distribution line (10) or separately therefrom, the supply of hot water from said distribution line (10) being stopped by taking it only from the recirculation line (20) till the water temperature in the recirculation line (20) drops below the predetermined threshold value, while in this condition, the distribution line (10) is opened and the recirculation line (20) is closed.

## Patentansprüche

1. Wasser- und Energiesparsystem für die Zufuhr von Heißwasser, welches System einen Heißwasser bereitenden Boiler oder einen Warmwasserbereiter oder eine Wärmepumpe (1) aufweist, mit einem Einlass (101) zum Zuführen von kaltem Wasser zum Heißwasser bereitenden Boiler oder zum Warmwasserbereiter oder zur Wärmepumpe (1) und einem Ausgabeauslass (301) für das von dem Heißwasser bereitenden Boiler oder dem Warmwasserbereiter oder der Wärmepumpe (1) erwärmte Wasser, der durch eine Heißwasser-Verteilungsleitung (10) mit mindestens einem Zufuhrhahn verbunden ist, wobei
eine Heißwasser-Umlaufleitung (20) vorgesehen ist, die mindestens eine Verzweigung (30) der Verteilungsleitung (10) stromabwärts des Ausgabeauslasses (301) und stromaufwärts von mindestens einem Zufuhrhahn mit dem Einlass (101) verbindet, der dem Heißwasser bereitenden Boiler oder dem Warmwasserbereiter oder der Wärmepumpe (1) kaltes Wasser zuführt,
und Ventile (V2) vorgesehen sind, um die Umlaufleitung zu öffnen und zu schließen, und wobei:
mindestens ein Temperatursensor (T2) in der Umlaufleitung (20) vorgesehen ist, und
das System eine Regeleinrichtung (2) aufweist mit:
einer Schnittstelle (402) zur Eingabe mindestens eines Temperaturwertes relativ zur gewünschten Zufuhrtemperatur von Heißwasser;
einem Vergleichsabschnitt (702) mit mindestens einem Eingang von dem mindestens einen Wassertemperatursensor (T2) in der Umlaufleitung (20);
einer Einheit (602), die den Befehl generiert und überträgt, durch den mindestens ein Ventil (V2) betätigt wird, das die Umlaufleitung (20) schließt/öffnet,
wobei die
Regeleinrichtung das mindestens eine Ventil (V2) steuert, um die Umlaufleitung (20) während des Schritts der Zufuhr von Heißwasser geöffnet zu halten, bis die Wassertemperatur innerhalb der Umlaufleitung (20) unter eine vorbestimmte Schwellentemperatur fällt, die um einen gegebenen Wert niedriger ist als die eingestellte Zufuhrtemperatur.

2. System nach Anspruch 1, wobei zwei Temperatursensoren (T1, T2) vorgesehen sind, von denen ein Temperatursensor (T1) in der Verteilungsleitung (10) stromaufwärts der Verzweigung (30) mit der Umlaufleitung (20) ist und der Temperatursensor (T2) in der Umlaufleitung (20) ist, wobei die Regeleinrichtung (2) mit Eingängen von jedem der Temperatursensoren (T1, T2) versehen ist, um innerhalb der Einheit (602) das Signal zu generieren, das das Öffnen/Schließen des Ventils (V2) betätigt.

3. System nach Anspruch 2, wobei in der Verteilungsleitung (10), stromaufwärts der Verzweigung (30) mit der Umlaufleitung (20), ein Schließ-/Öffnungsventil (V3) für die Verteilungsleitung (10) vorgesehen ist, wobei das Ventil in Abhängigkeit von der in der Verteilungsleitung (10) und in der Umlaufleitung (20) von den jeweiligen Sensoren (T1, T2) gemessenen Temperatur von der Regeleinrichtung (2) geregelt wird.

4. System nach Anspruch 3, wobei das Ventil (V2) und/oder der Temperatursensor (T2) in der Umlaufleitung (20) und/oder das Ventil (V3) und/oder der Temperatursensor (T1) in der Verteilungsleitung (10) stromaufwärts der Verzweigung der Umlaufleitung (20) mit der Verteilungsleitung (10) und vorzugsweise möglicherweise in enger Nähe zur Verzweigung in Bezug auf die Zufuhrrichtung von Heißwasser bei Anforderung von Heißwasser vorgesehen sind.

5. System nach einem oder mehreren der vorhergehenden Ansprüche, wobei in der Umlaufleitung (20) und/oder in der Verteilungsleitung (10) auch eine Rückspeisepumpe (201) vorgesehen ist, wobei es sich um eine Pumpe handelt, die einer möglichen Ausgabepumpe hinzugefügt ist, die in dem Warmwasserbereiter (1) oder dem Boiler oder der Wärmepumpe vorgesehen ist, oder wobei die Ausgabepumpe bereits in dem Warmwasserbereiter oder in dem Boiler oder in der Wärmepumpe vorgesehen ist und wobei die Pumpe (201) von der Regeleinrichtung (2) geregelt wird.

6. System nach einem oder mehreren der vorhergehenden Ansprüche, wobei ein drittes Öffnungs- und Schließventil (V1) vorgesehen ist, welches von der Regeleinrichtung (2) durch Servosystem geregelt wird, wobei das Öffnungs-/Schließventil (V1) stromabwärts der Verzweigung (30) der Heißwasser-Verteilungsleitung (10) mit der Umlaufleitung (20) und stromaufwärts der Zufuhrhähne oder eines speziellen Zufuhrhahns in Bezug auf die Zufuhrrichtung von Heißwasser auf Anforderung von Heißwasser vorgesehen ist.

7. System nach Anspruch 6, wobei die Ventile (V1, V2, V3) und/oder die Temperatursensoren (T1, T2) und/oder die Pumpe (201) und/oder die Eingabeschnittstelle (402) und eine Anzeigeschnittstelle (302) für den Benutzer über Funkverbindung mit der Regeleinrichtung (2) kommunizieren, wie über WLAN oder dergleichen.

8. System nach einem oder mehreren der vorhergehenden Ansprüche, wobei Steuermittel vorgesehen sind, die einen Anforderungsschritt steuern, um eine spezielle Zeitanforderung zu generieren durch Einstellen der geschätzten Zeit für die Zufuhr von Heißwasser, nachdem der Umlaufzweig zum Zeitpunkt T bereits geleert wurde, wobei das Heizen angehalten wird, damit Kaltwasser in das System eintreten kann, um das gesamte, bereits heiße Wasser, das in dem Hauptzweig vorhanden ist, zu den Zufuhrhähnen zu schieben.

9. System nach einem oder mehreren der vorhergehenden Ansprüche 7 oder 8, **dadurch gekennzeichnet, dass** die Benutzer-Anzeigeschnittstelle (302) in Form eines Steuertastenfelds vorliegt, wobei ein Tastenfeld für jeden Zufuhrhahn vorgesehen ist und das Tastenfeld mit einer Schaltfläche versehen ist, um Heißwasser anzufordern.

10. Verfahren zum Steuern eines Systems zum Bereiten von Heißwasser nach den Ansprüchen 1-9, wobei das System einen Heißwasser bereitenden Boiler oder einen Warmwasserbereiter oder eine Wärmepumpe (1) aufweist, wobei ein Einlass (101) dem Warmwasserbereiter oder dem Boiler oder der Wärmepumpe kaltes Wasser zuführt, und einen Ausgabeauslass (301) für das von dem Boiler erwärmte Wasser aufweist, der durch eine Heißwasser-Verteilungsleitung (10) mit mindestens einem Zufuhrhahn verbunden ist, und wobei in einem solchen System eine Heißwasser-Umlaufleitung (20) vorgesehen ist, die mindestens eine Verzweigung (30) der Verteilungsleitung (10) stromabwärts des Ausgabeauslasses (301) und stromaufwärts von mindestens einem Zufuhrhahn mit dem Einlass (101) verbindet, der kaltes Wasser in den Warmwasserbereiter (1) oder in den Boiler oder in die Wärmepumpe zuführt, und Ventile (V2) vorgesehen sind, die die Umlaufleitung öffnen und schließen, und wobei:
Einstellen eines Temperaturwertes relativ zur gewünschten Zufuhrtemperatur von Heißwasser;
Messen einer Temperatur (T2) in der Umlaufleitung (20) während des Umlaufs;
Vergleichen der gemessenen Temperatur (T2) mit einer vorbestimmten Schwellentemperatur, die um einen gegebenen Wert geringer ist als die Wasserzufuhrtemperatur;
und bei Erreichen der Wasserzufuhrtemperatur in der Umlaufleitung (20) das Heißwasser der Umlaufleitung (20) zusammen mit dem Heißwasser in der Verteilungsleitung (10) oder von diesem getrennt dem Zufuhrhahn zugeführt wird, wobei die Zufuhr von Heißwasser von der Verteilungsleitung (10) angehalten wird, indem es nur von der Umlaufleitung (20) entnommen wird, bis die Wassertemperatur in der Umlaufleitung (20) unter den vorbestimmten Schwellenwert fällt, während in diesem Zustand die Verteilungsleitung (10) geöffnet und die Umlaufleitung (20) geschlossen wird.

## Revendications

1. Système d'économie d'eau -et d'énergie- pour fournir eau chaude, lequel système comprend une chaudière de production d'eau chaude ou un chauffe-eau ou une pompe à chaleur (1), avec une entrée (101) pour fournir de l'eau froide à ladite chaudière de production d'eau chaude ou audit chauffe-eau ou à ladite pompe à chaleur (1) et une sortie de distribution (301) pour l'eau chauffée par ladite chaudière de production d'eau chaude ou ledit chauffe-eau ou ladite pompe à chaleur (1) qui est reliée par une conduite de distribution d'eau chaude (10) à au moins un robinet de livraison, dans lequel est prévue une conduite de recirculation (20) d'eau chaude qui relie au moins un raccord (30) de ladite conduite de distribution (10), en aval de la sortie de distribution (301) et en amont d'au moins un robinet de livraison, à l'entrée (101) fournissant de l'eau froide à la chaudière de production d'eau chaude ou au chauffe-eau ou à la pompe à chaleur (1) et sont prévues des soupapes (V2) pour ouvrir et fermer la conduite de recirculation, et dans lequel:
au moins un capteur de température (T2) est prévu dans la conduite de recirculation (20) et
le système comprend une unité de commande (2) avec:
une interface (402) pour saisir au moins une valeur de température relative à la température de livraison désirée de l'eau chaude;
une section de comparaison (702) avec au moins une entrée de données provenant dudit au moins un capteur de température de l'eau (T2) dans la conduite de recirculation (20);
une unité (602) générant et transmettant la commande actionnant au moins une soupape (V2) pour fermer/ouvrir la conduite de recirculation (20),
dans lequel l'unité de commande règle ladite au moins une soupape (V2) afin de maintenir ouverte la conduite de recirculation (20) pendant l'étape de livraison d'eau chaude jusqu'à ce que la température de l'eau à l'intérieur de ladite conduite de recirculation (20) baisse au-dessous d'une température de seuil prédéterminée inférieure, par une valeur donnée, à la température de livraison définie.

2. Système selon la revendication 1, dans lequel sont prévus deux capteurs de température (T1, T2) dont un capteur de température (T1) dans la conduite de distribution (10) en amont du raccord (30) avec la conduite de recirculation (20) et le capteur de température (T2) dans la conduite de recirculation (20), l'unité de commande (2) étant munie d'entrées de données provenant de chacun des capteurs de température (T1, T2) pour générer à l'intérieur de l'unité (602) le signal actionnant ladite soupape d'ouverture/fermeture (V2).

3. Système selon la revendication 2, dans lequel, dans la conduite de distribution (10), en amont du raccord (30) avec la conduite de recirculation (20), est prévue une soupape de fermeture/ouverture (V3) pour ladite conduite de distribution (10), laquelle soupape est réglée par l'unité de commande (2) en fonction de la température mesurée dans la conduite de distribution (10) et dans la conduite de recirculation (20) par les respectifs capteurs (T1, T2).

4. Système selon la revendication 3, dans lequel la soupape (V2) et/ou le capteur de température (T2) dans la conduite de recirculation (20) et/ou la soupape (V3) et/ou le capteur de température (T1) dans la conduite de distribution (10) sont prévus en amont du raccord (30) de ladite conduite de recirculation (20) avec la conduite de distribution (10) et de préférence éventuellement à proximité immédiate dudit raccord en se référant à la direction de livraison d'eau chaude sur demande d'eau chaude.

5. Système selon une ou plusieurs des revendications précédentes, dans lequel, dans la conduite de recirculation (20) et/ou dans la conduite de distribution (10), est également prévue une pompe de recirculation (201) qui est une pompe ajoutée à une éventuelle pompe de distribution pourvue dans le chauffe-eau (1) ou la chaudière ou la pompe à chaleur, ou à ladite pompe de distribution déjà fournie dans le chauffe-eau ou dans la chaudière ou dans la pompe à chaleur et laquelle pompe (201) est réglée par l'unité de commande (2).

6. Système selon une ou plusieurs des revendications précédentes, dans lequel est prévue une troisième soupape d'ouverture et de fermeture (V1), servocommandée par l'unité de commande (2), laquelle soupape d'ouverture/fermeture (V1) est prévue en aval du raccord (30) de la conduite de distribution d'eau chaude (10) avec la conduite de recirculation (20) et en amont des robinets de livraison ou d'un robinet de livraison spécifique se référant à la direction de livraison d'eau chaude sur demande d'eau chaude.

7. Système selon la revendication 6, dans lequel les soupapes (V1, V2, V3) et/ou les capteurs de température (T1, T2) et/ou la pompe (201) et/ou l'interface (402) d'entrée des données et une interface de visualisation (302) à l'utilisateur communiquent avec l'unité de commande (2) par connexion radio, telle que wi-fi ou similaire.

8. Système selon une ou plusieurs des revendications précédentes, dans lequel sont prévus des moyens de commande qui règlent une étape de demande de manière à générer une demande de temps spécifique en définissant le temps estimé pour fournir eau chaude, après avoir déjà vidé le branchement de recirculation à l'instant T, le chauffage étant arrêté de manière à permettre à l'eau froide qui entre dans le système de pousser toute l'eau déjà chaude prévue dans le branchement principal vers les robinets de livraison.

9. Système selon une ou plusieurs des revendications précédentes 7 ou 8, **caractérisé en ce que** l'interface de visualisation à l'utilisateur (302) se présente sous forme d'un pavé numérique de commande, étant prévu un pavé numérique pour chaque robinet de livraison et ledit pavé numérique étant muni d'un bouton de commande pour demander eau chaude.

10. Procédé de commande d'un système de production d'eau chaude selon les revendications 1-9, lequel système comprend une chaudière de production d'eau chaude ou un chauffe-eau ou une pompe à chaleur (1), une entrée (101) fournissant de l'eau froide audit chauffe-eau ou à ladite chaudière ou à ladite pompe à chaleur et une sortie de distribution (301) pour l'eau chauffée par ladite chaudière qui est reliée par une conduite de distribution d'eau chaude (10) à au moins un robinet de livraison, et dans ce système est prévue une conduite de recirculation d'eau chaude (20) qui relie au moins un raccord (30) de ladite conduite de distribution (10), en aval de la sortie de distribution (301) et en amont d'au moins un robinet de livraison, à l'entrée (101) fournissant de l'eau froide dans le chauffe-eau (1) ou dans la chaudière ou dans la pompe à chaleur et des soupapes (V2) ouvrant et fermant la conduite de recirculation, et dans lequel:
établir une valeur de température relativement à la température de livraison désirée de l'eau chaude;
mesurer une température (T2) dans la conduite de recirculation pendant la recirculation (20);
comparer ladite température mesurée (T2) avec une température de seuil prédéterminée inférieure, par une valeur donnée, à la température de livraison d'eau;
et après avoir atteint la température de livraison d'eau dans la conduite de recirculation (20), l'eau chaude de la conduite de recirculation (20) est fournie au robinet de livraison en même temps que l'eau chaude dans la conduite de distribution (10) ou séparément de celle-ci, la livraison d'eau chaude de ladite conduite de distribution (10) étant arrêtée en la prenant seulement de la conduite de recirculation (20) jusqu'à ce que la température de l'eau dans la conduite de recirculation (20) baisse au-dessous de la valeur de seuil prédéterminée, alors que dans cette condition, la conduite de distribution (10) est ouverte et la conduite de recirculation (20) est fermée.
